Europäisches Patentamt

European Patent Office

Office européen des brevets

(19)

(11) Numéro de publication: **0 314 530**
**A1**

# (12) DEMANDE DE BREVET EUROPEEN

(21) Numéro de dépôt: **88400173.6**

(22) Date de dépôt: **27.01.88**

(51) Int. Cl.⁴: **G 06 F 1/00**

(30) Priorité: **30.10.87 FR 8715041**

(43) Date de publication de la demande:
**03.05.89 Bulletin 89/18**

(84) Etats contractants désignés: **DE ES GB IT**

(71) Demandeur: **MICROPHAR, Sàrl dite:**
**15 rue d'Armenonville**
**F-92200 Nueilly Sur Seine (FR)**

(72) Inventeur: **Parent, Jacques**
**16 avenue Ste Foy**
**F-92200 Neuilly Sur Seine (FR)**

(74) Mandataire: **Pinguet, André**
**CAPRI 28 bis, avenue Mozart**
**F-75016 Paris (FR)**

(54) **Dispositif à mémoire de controle de l'utilisation d'un logiciel du type clé.**

(57) Un dispositif à mémoire de contrôle de l'utilisation d'un logiciel, du type clé, comprend un circuit électronique (13) connectable aux bornes de communication (17) d'une interface normalisée prévue entre un ordinateur et un de ses accessoires périphériques et renvoyant des signaux de réponse à l'ordinateur lorsque celui-ci lui envoie des signaux d'interrogation. Le circuit électronique (13) comprend une mémoire rémanente (14) reliée à ladite interface (17) et alimentée par elle de façon telle que ledit ordinateur, chargé dudit logiciel, puisse tantôt lire tantôt écrire des informations dans ladite mémoire (14).

Fig. 3

Bundesdruckerei Berlin

EP 0 314 530 A1

## Description

## DISPOSITIF A MEMOIRE DE CONTRÔLE DE L'UTILISATION D'UN LOGICIEL, DU TYPE CLE.

La présente invention a trait à un procédé et un dispositif, du type clé, de contrôle de l'exploitation de tout ou partie d'un logiciel pour ordinateur par une personne non autorisée.

Le terme "ordinateur" s'applique essentiellement ici aux micro-ordinateurs voire aux mini-ordinateurs

On connaît des procédés visant à empêcher une personne non autorisée d'utiliser un logiciel. Certains consistent à insérer dans le logiciel des instructions pour demander a l'utilisateur d'entrer un code ou un mot de passe que lui seul est supposé connaître, mais il est alors assez facile de se procurer le code ou le mot de passe et de se servir de copies du logiciel. D'autres vérifient la présence d'un numéro interne et propre à la machine. Ces numéros n'existent pas dans les micro-ordinateurs pour des raisons de fabrication en grande série. D'autres instructions peuvent être intégrées au logiciel en vue de rendre difficile sa copie, mais il existe à l'heure actuelle des programmes de copie très puissants. D'autre part, si un logiciel est très bien protégé contre la copie par instructions rajoutées, l'utilisateur ne peut pas se faire des copies de sauvegarde de son logiciel.

Ces procédés de l'art antérieur ont un point commun: ils relèvent de ce que les informaticiens appellent le "software", c'est-à-dire qu'ils ne reposent que sur des modifications du logiciel d'origine, par opposition à des procédés qui mettraient en jeu des dispositifs physiques ou qui reposeraient sur des modifications du matériel rentrant dans la composition du système informatique lui-même, le "hardware". Il suffit pour les déjouer soit d'utiliser des logiciels spécialisés, soit de "désassembler" le logiciel -le transcrire d'un langage machine dans un autre langage informatique, notamment l'assembleur- et retrouver les modifications apportées. La neutralisation ou la suppression de ces modifications -le "déplombage" du logiciel- sont souvent difficiles, mais elles restent plus accessibles aux "pirateurs" -utilisateurs ou copieurs de logiciels non autorisés- que les interventions sur le matériel lui-même. Autrement dit, les "pirateurs" ont plus souvent des compétences relatives au "software" qu'au "hardware", et il leur est plus facile de "déplomber" un logiciel ou se procurer un code d'accès que de localiser et neutraliser une modification apportée au matériel lui-même.

Cependant, il existe également des procédés reposant sur une modification du matériel pour l'adapter à l'utilisation du logiciel, mais ils interdisent l'utilisation du logiciel sur des ordinateurs n'ayant pas subi cette modification, ce qui restreint inutilement l'utilisation du logiciel.

Enfin, d'autres procédés sont basés sur l'utilisation d'un accessoire physique, dit clé, à greffer sur le matériel avant utilisation d'un logiciel. Certains sont très simples, ce qui les rend faciles à reconstituer, tels les "straps" -pontages ou shunts- entre certaines des bornes périphériques de l'ordinateur, dont le logiciel demande à l'ordinateur de vérifier la présence. D'autres sont plus complexes et donc plus difficiles à contrefaire, surtout s'ils comprennent des circuits électroniques noyés dans de la résine, ou des composants électroniques dont on a effacé les références, ou encore des mémoires mortes programmables. Dans l'art antérieur, la plupart des dispositifs à mémoire avaient besoin d'une alimentation complémentaire en énergie.

Le but de la présente invention est de proposer un procédé et dispositif à mémoire, du type clé, de limitation ou de contrôle de l'utilisation d'un logiciel pour un ordinateur qui permette à un utilisateur autorisé de faire autant de copies de sauvegarde qu'il souhaite, qui soit immédiatement transférable d'un ordinateur à un autre, et qui soit efficace, sûr, transparent, très souple d'utilisation et ne nécessitant pas obligatoirement d'alimentation indépendante en énergie.

Comme décrit ci-dessous, certains modes de réalisation de l'invention rendent pratiquement impossible l'utilisation libre d'un logiciel sans un accès direct au dispositif.

Selon la présente invention, un dispositif de contrôle de l'utilisation d'un logiciel, du type clé, comprend un circuit électronique, connectable aux bornes de communication d'une interface normalisée prévue entre un ordinateur et un de ses accessoires périphériques, qui peut renvoyer des signaux de réponse à l'ordinateur lorsque celui-ci lui envoie des signaux d'interrogation, ledit circuit comprenant une mémoire rémanente reliée à ladite interface de façon telle que ledit ordinateur, chargé dudit logiciel, puisse tantôt lire tantôt écrire des informations dans ladite mémoire.

On entend ici par mémoire rémanente, ou "non volatile", une mémoire qui puisse garder des informations lorsqu'elle n'est plus alimentée en énergie. Les mémoires mortes programmables effaçables électriquement -EEPROM-, par exemple, sont des mémoires rémanentes.

Selon l'invention, ladite mémoire peut avoir une consommation d'énergie électrique suffisamment faible pour n'être alimentée en énergie que par ladite interface normalisée.

Un procédé de contrôle de l'utilisation d'un logiciel par un ordinateur comprend, selon l'invention, l'étape d'ajouter audit logiciel des instructions complémentaires subordonnant l'exploitation par l'ordinateur de tout ou partie dudit logiciel à la présence, à certaines des bornes périphériques dudit ordinateur, d'un dispositif électronique comprenant une mémoire rémanente, lesdites instructions complémentaires pouvant comprendre:

- la lecture d'informations contenues dans ladite mémoire,

- la vérification desdites informations par ledit ordinateur qui, en fonction des résultats de cette vérification, poursuit normalement ou non l'utilisation dudit logiciel, et

- l'écriture dans ladite mémoire d'autres informations remplaçant ou complétant les précédentes en vue d'une vérification ultérieure.

Ladite vérification peut consister à vérifier que lesdites informations sont bien reliées entre elles selon une relation prédéterminée inscrite dans ledit logiciel.

D'autres caractéristiques et avantages de la présente invention apparaîtront mieux à la lecture de la description suivante donnée à titre d'exemples non limitatifs des formes possibles de réalisation de l'invention, en regard des dessins ci-joints, et qui fera bien comprendre comment l'invention peut être réalisée.

Sur les dessins:

   - les figures 1 a et 1 b sont des schémas de montage représentant des modes de connexion possibles de dispositifs selon l'invention;

   - la figure 2 est un schéma de principe du câblage d'un dispositif selon l'invention;

   - la figure 3 est un schéma de principe du circuit électronique faisant partie du dispositif de la figure 2;

   - la figure 4 est un schéma de principe du circuit électronique d'un autre dispositif selon l'invention;

   - les figures 5a et 5b sont des chronogrammes caractéristiques d'une mémoire rémanente utilisable pour la réalisation de l'invention.

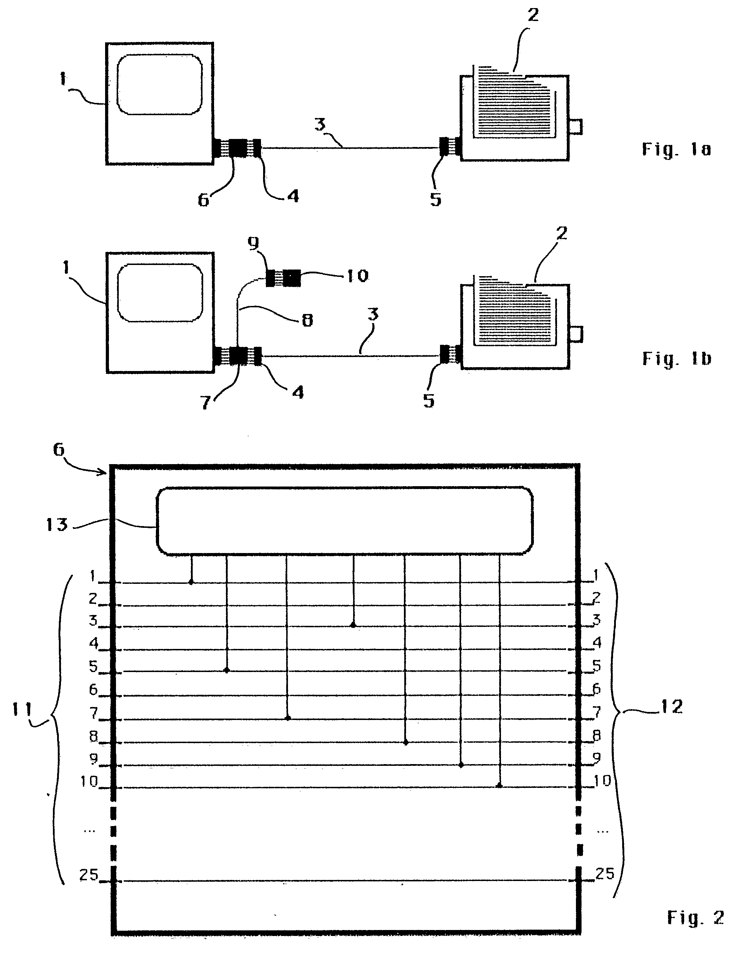

Sur les figures 1a et 1b, un ordinateur 1 est connecté à une imprimante 2 au moyen d'un cordon de liaison 3 muni en chacune de ses extrémités de prises de connexion 4, 5 à plusieurs bornes, enfichables respectivement sur l'ordinateur 1 et l'imprimante 2. Selon l'invention, des instructions sont ajoutées à un logiciel de façon à ce que l'exploitation de tout ou partie du logiciel soit subordonnée à la présence, à certaines des bornes périphériques de l'ordinateur, d'un dispositif dit de protection. Sur la figure 1a, ledit dispositif se présente sous la forme d'un boîtier ou clé 6 connectée globalement en série entre l'ordinateur 1 et l'une des prises 4 du cordon de liaison 3, ledit boîtier abritant un circuit électronique spécifique qui sera décrit ci-après.

Sur la figure 1b, le dispositif de protection est scindé en deux parties: d'une part un boîtier de dérivation 7 prolongé par un câble 8 muni d'une prise de connexion 9, d'autre part un boîtier terminal 10 sur lequel on peut enficher la prise 9, et abritant ledit circuit électronique spécifique. La variante de la figure 1b réalise un piquage qui permet d'installer et retirer le dispositif de protection sans débrancher l'imprimante. Les connexions internes du boîtier 10 sont telles que celui-ci pourrait être branché directement sur l'ordinateur en l'absence de l'imprimante.

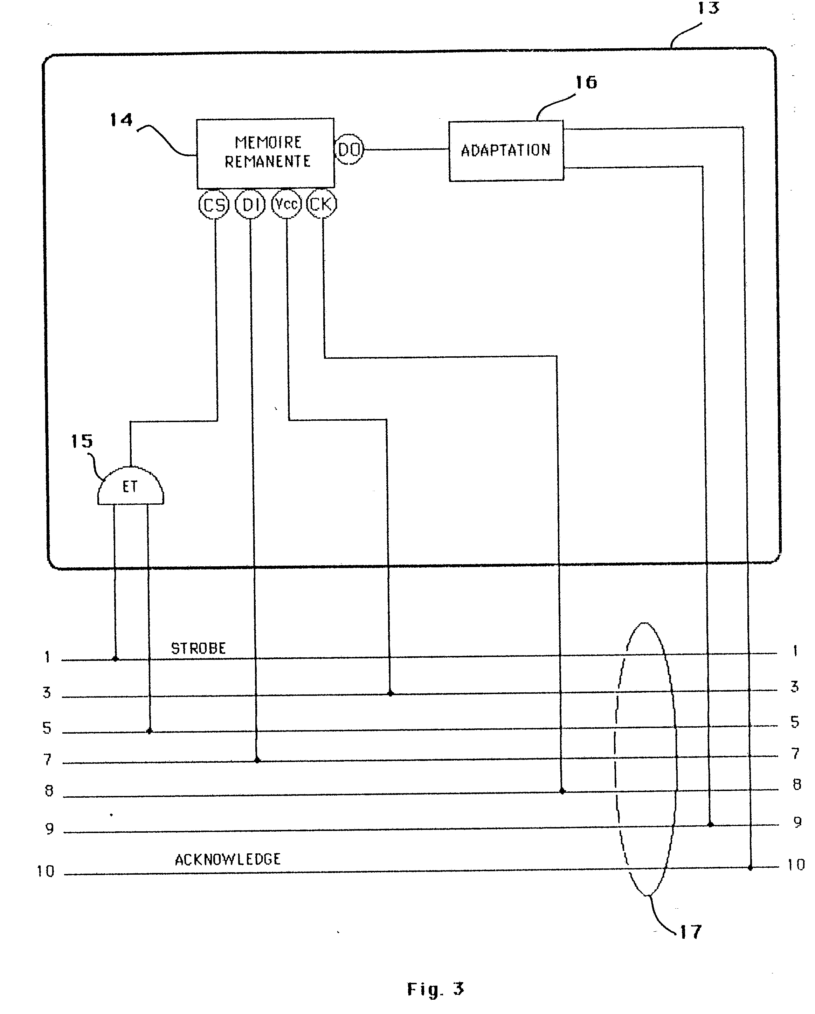

La figure 2 représente schématiquement l'intérieur du dispositif 6 de la figure 1 a selon l'invention. Nous sommes dans le cas d'une interface normalisée de type parallèle entre l'ordinateur et l'imprimante. Cette interface comporte vingt-cinq bornes ayant des attributions normalisées, qui seront décrites ci-après en référence à la figure 3. Pour conserver les liaisons entre l'ordinateur et l'imprimante, le boîtier comporte vingt-cinq bornes d'entrée 1 1 reliées directement et respectivement à ses vingt-cinq bornes de sortie 12. Sur l'exemple de la figure 2, les bornes numéros 1, 3, 5, 7, 8, 9, et 10 sont reliées aux bornes d'un circuit électronique spécifique 13.

Sur le schéma de fonctionnement de la figure 3, on a représenté celles 17 des liaisons entre les bornes d'entrée et de sortie du boîtier 6 qui étaient reliées au circuit électronique 13. Le circuit électronique 13 a pour composant principal une mémoire rémanente 1 4 -non volatile- du type mémoire morte programmable effaçable électriquement -EEPROM- à très faible consommation de courant électrique.

Ladite mémoire 14 présente une borne d'entrée de données DI, une borne de sortie de données DO, une borne de validation CS, une borne d'horloge CK et une borne d'alimentation Vcc, ladite borne de validation CS étant reliée par l'intermédiaire d'une porte ET 15 d'une part à la borne normalisée numéro 1 dite STROBE de ladite interface parallèle et d'autre part à une des bornes normalisées dites de données de ladite interface parallèle, ici la borne normalisée numéro 5, lesdites bornes d'entrée de données DI, d'alimentation Vcc et d'horloge CK étant reliées à d'autres bornes normalisées dites de données de ladite interface parallèle 17, ici les bornes normalisées numéros 7, 3 et 8 respectivement, et ladite borne de sortie de données DO de ladite mémoire 14 est reliée, de préférence par l'intermédiaire d'un moyen d'adaptation de signal 16, d'une part à une autre desdites bornes de données, ici la borne normalisée numéro 9, et/ou d'autre part à la borne normalisée numéro 10 dite ACKNOWLEDGE, ou à la borne normalisée numéro 12, dite PAPER-END. Les appellations "interface normalisée du type parallèle" ou "du type série" font référence ici aux deux types d'interfaces utilisées dans le domaine de la connectique informatique. Ces appellations sont très couramment utilisées par l'homme de l'art.

Sur une interface normalisée de type parallèle telle que décrite ci-dessus, les numéros des vingt-cinq bornes correspondent aux attributions suivantes, selon les conventions adoptées par la plupart des constructeurs, notamment CENTRONICS et IBM:

- la borne numéro 1, appelée "STR0BE" par l'homme de l'art, conduit un signal qui prévient l'unité périphérique, ici l'imprimante 2, que l'on s'adresse à elle et que des instructions vont lui parvenir: toute commande provenant de l'ordinateur et addressée à l'imprimante est précédée d'un signal prédéterminé, en l'occurence un front descendant sur le STROBE;

- les bornes numéros 2 à 9 sont des bornes dites de données, appelées souvent bornes "DATA" par l'homme de l'art. C'est d'elles que partent les données à destination de l'imprimante, telles qu'un texte à imprimer par exemple;

- les bornes numéros 10 à 17 sont des bornes dites de service, par lesquelles passent des commandes prédéterminées entre l'ordinateur et l'imprimante. La borne numéro 1 0 a une fonction particulière: c'est la borne dite d'accusé de réception, appelée "ACKN0WLEDGE" par l'homme de l'art; l'ordinateur peut y lire des informations, pour savoir par exemple si l'imprimante a bien reçu les données ou les instructions qu'il lui a envoyées;
- les bornes numéros 18 à 25 sont reliées à la masse.

Ledit moyen d'adaptation de signal 16 a notamment pour rôle d'adapter la sortie de ladite mémoire auxdites bornes normalisées numéros 9 et 10 et d'empêcher la liaison entre ces deux bornes.

Ladite porte ET 15 pourrait être remplacée par un équivalent logique.

Dans un mode de réalisation possible de l'invention, et bien que ce ne soit pas dans l'esprit de l'invention, ladite borne d'alimentation Vcc de ladite mémoire est reliée à un moyen auxiliaire d'alimentation en énergie électrique, tel qu'une pile électrique, un condensateur chargé, etc...

Ladite interface peut servir à connecter une imprimante à l'ordinateur, celle-ci n'étant qu'un exemple d'accessoire périphérique. Le dispositif est "transparent" du point de vue du fonctionnement de cet accessoire périphérique.

L'interface entre l'ordinateur et l'imprimante étant normalisée, il est possible d'utiliser le logiciel ainsi modifié pour contrôler son exploitation sur d'autres ordinateurs possédant ce type d'interface. Il suffit pour cela de se munir de la disquette sur laquelle est enregistré le logiciel et de la clé correspondante nécessaire à son exploitation.

Il est inutile de protéger le logiciel contre la copie puisqu'il faut être en possession de la clé pour l'utiliser. On peut donc faire autant de copies de sauvegarde du logiciel qu'on le souhaite. On peut même prêter un exemplaire du logiciel à des fins de démonstration sans craindre qu'il soit copié pour être exploité.

Le contrôle de l'exploitation du logiciel est de plus programmable avant la compilation du logiciel, ce qui permet à l'utilisateur de mettre au point son propre programme d'utilisation de la clé. Ce programme peut même être développé non seulement en langage machine, mais aussi en tout autre langage tel que le Basic, le C, etc... dans divers systèmes d'exploitation (MS-DOS, XENIX, PROLOGUE, etc...).

Le choix des bornes normalisées de données de l'interface parallèle 17, ici les DATA numéros 3, 5, 7, 8 et 9, attribuées aux bornes de la mémoire détermine un code permettant de distinguer plusieurs groupes de clés.

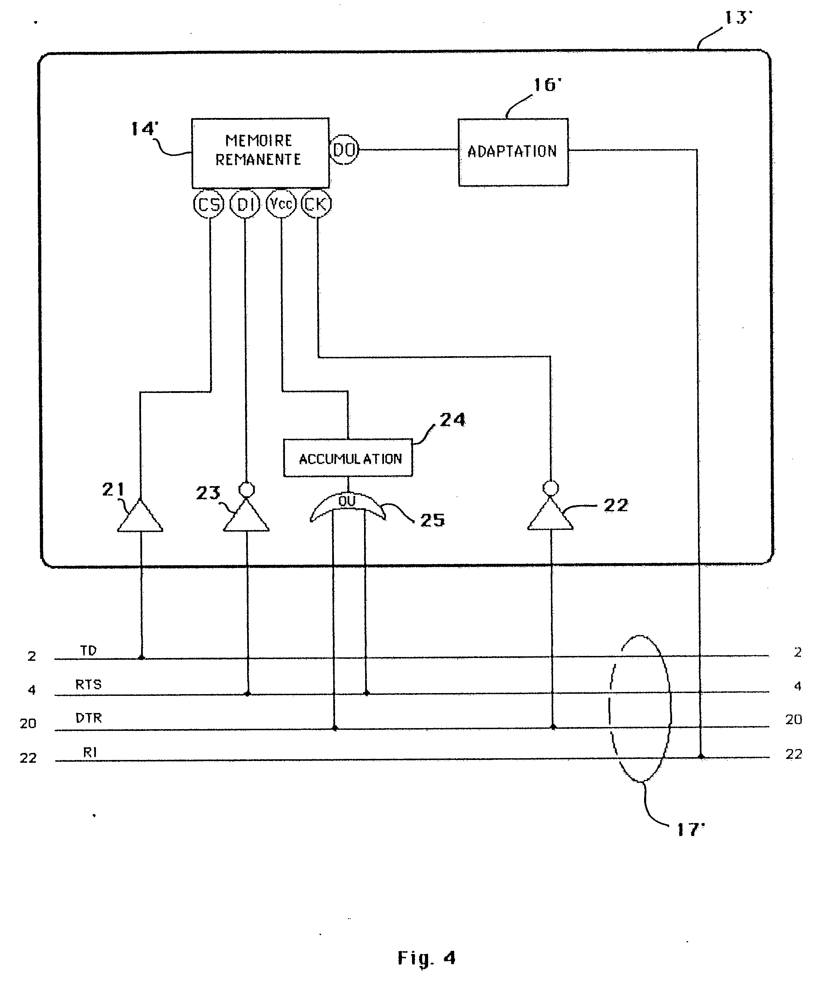

Sur la figure 4, on a représenté un dispositif selon l'invention similaire à celui de la figure 3, mais applicable à une interface normalisée de type série, par exemple RS 232. Seuls certains 17' des conducteurs ou bornes d'une telle interface y sont représentés.

On y trouve aussi une mémoire rémanente 14' comprenant une borne d'entrée de données DI, une borne de sortie de données DO, une borne de validation CS, une borne d'horloge CK et une borne d'alimentation Vcc. Ladite borne de validation CS est reliée, de préférence par l'intermédiaire d'un premier tampon de protection 21, à la borne normalisée numéro 2 dite "TRANSMITTED DATA" de ladite interface, ladite borne d'horloge CK est reliée, de préférence par l'intermédiaire d'un deuxième tampon de protection 22, à la borne normalisée numéro 20 dite "DATA TERMINAL READY" de ladite interface, ladite borne d'entrée de données est reliée, de préférence par l'intermédiaire d'un troisième tampon de protection 23, à la borne normalisée numéro 4 dite "REQUEST TO SEND" de ladite interface, ladite borne de sortie de données est reliée, de préférence par l'intermédiaire d'un moyen d'adaptation de signal 16', à une borne de ladite interface 17' choisie dans le groupe constitué par les bornes normalisées numéros 6, 8 et 22 de ladite interface, dites respectivement "DATA SET READY", "RECEIVED LINE SIGNAL DETECTOR" et "RING INDICATOR", et ladite borne d'alimentation est reliée, de préférence par l'intermédiaire d'un moyen d'accumulateur régulé 24 et d'une porte OU 25 montés en série, aux bornes normalisées numéros 4 et 20 de ladite interface. Les bornes numéros 2 et 4 pourraient être permutées.

Ledit moyen d'accumulateur régulé 24 peut par exemple comprendre un condensateur et une diode dite Zener montés en parallèle.

Lesdits deuxième et troisième tampons peuvent être du type inversé, et comprendre, en série, une résistance et une porte NON-ET depuis l'interface 17' vers ladite mémoire 14'.

Le choix d'inverser ou non les tampons doit simplement être en accord avec celui de travailler en logique positive ou en logique négative pour les instructions qui seront rajoutées au logiciel à protéger.

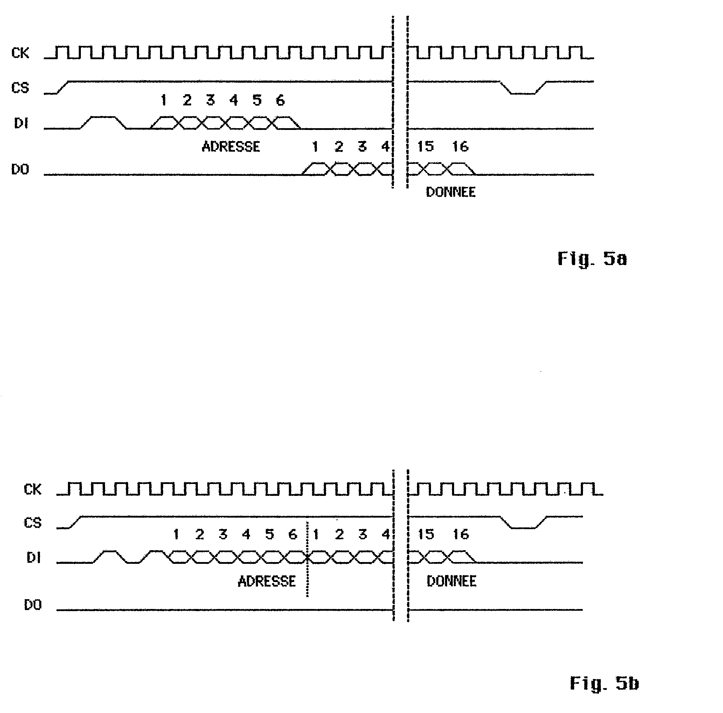

Un exemple d'une telle mémoire rémanente 14, 14' est le composant électronique commercialisé sous la référence 93C46P par la société américaine ICT ou sous la référence HY93C46 par la société coréenne HYUNDAI SEMICONDUCTOR. Il s'agit d'une mémoire sur laquelle la plupart des microprocesseurs peuvent lire et écrire des données en mode série, c'est-à-dire les unes à la suite des autres, précédées de leurs adresses respectives. Dans le cas particulier du composant ci-dessus, une adresse comporte six bits et une donnée se présente sous la forme d'un "mot" de seize bits. La capacité de sa mémoire est de 64 mots de 16 bits soit 1024 bits. Il peut être alimenté sous une tension inférieure à 5 Volts. Les modes de fonctionnement d'un tel composant seront mieux illustrés ci-après en référence aux figures 5a et 5b.

Pour mieux comprendre le fonctionnement du dispositif de l'invention, on se référera tout d'abord à ce que l'on appelle le chronogramme d'un composant à mémoire rémanente pouvant être monté dans le circuit électronique d'un dispositif selon l'invention. Un chronogramme montre notamment les enchaînements entre les évolutions temporelles de principe des signaux en présence aux bornes de ladite mémoire.

Sur les figures 5a et 5b, on a représenté les chronogrammes d'un composant à mémoire rémanente -dit plus simplement ici mémoire rémanente- 14, 14' utilisable pour la réalisation des dispositifs des figures 3 et 4, respectivement en modes lecture et écriture.

Sur le chronogramme en mode lecture de la figure 5a, on a représenté les évolutions temporelles des signaux aux bornes d'horloge CK, de validation CS, d'entrée de données DI et de sortie de données DO dudit composant. Des impulsions d'horloge en provenance de l'ordinateur, et arrivant par la borne d'horloge CK, sont représentées sous forme de créneaux sur l'évolution temporelle CK. Pour que ce composant soit activée, sa borne de validation CS doit être mise au potentiel "haut", par opposition à "bas". Dès que le composant est activé de cette façon, un signal spécifique est envoyé sur la borne d'entrée de données DI pour lui indiquer si on veut lire ou écrire des informations dans les registres de données de sa mémoire.

Sur la figure 5a, on veut lire des données, et ledit signal spécifique est constitué d'un niveau haut -ou 1- pendant deux unités de temps d'horloge puis d'un niveau bas -ou 0- pendant une unité de temps, soit 1-1-0. Une fois ce signal parvenu à la borne d'entrée de données DI, une adresse, ici de 6 bits, envoyée sur cette même borne provoquera la sortie du contenu du registre correspondant, ici un mot de 16 bits, sur la borne de sortie de données DO de la mémoire.

Un chronogramme similaire est représenté sur la figure 5b pour le mode écriture. Cette fois, le signal spécifique du mode écriture que l'on envoie au préalable sur la borne d'entrée de donnée DI est constitué d'un niveau bas placé entre deux niveaux hauts, chacun pendant une unité de temps d'horloge, soit 1-0-1. L'envoi d'une adresse, ici de 6 bits, suivie d'une donnée, ici un mot de 16 bits, sur la borne d'entrée DI aura pour résultat l'écriture de cette donnée dans le registre de la mémoire correspondant à cette adresse.

Entre deux lectures ou entre deux écritures, la borne de validation doit repasser par un niveau bas. Les bornes d'entrée DI et de sortie DO doivent être sous le contrôle des signaux appliqués à la borne d'horloge CK et à la borne de validation CS.

Tout composant présentant des caractéristiques de fonctionnement équivalentes dans leur principe à celles indiquées en référence à l'exemple ci-dessus est applicable à la présente invention.

Dans un mode de réalisation avantageux de l'invention, et dans un souci de sécurité, on définira dans la mémoire deux zones principales de tailles égales. Une première zone sera affectée aux opérations de lecture et d'écriture, tandis que la deuxième permettra à l'ordinateur de faire un essai d'enregistrement pour pallier un défaut éventuel d'écriture sur la clé avant de risquer d'effacer par erreur le contenu de la première.

Les possibilités d'utilisation d'une telle clé pour la protection d'un logiciel sont très nombreuses, pratiquement sans autres limites que celles de l'imagination de leurs utilisateurs.

Les instructions complémentaires associées au logiciel à protéger par subordination de tout ou partie de son fonctionnement à la présence de la clé peuvent provoquer toutes les séquences de lecture, d'écriture et de vérification possibles et imaginables, dans les limites de la mémoire disponible bien entendu. Quelques exemples en sont donnés dans la suite de la description.

Une protection de type "classique" consiste à rentrer dans un registre de la mémoire un numéro et de faire vérifier la présence de la clé par l'ordinateur par la vérification de ce numéro. Cette vérification peut être faite autant de fois que nécessaire, et aux endroits désirés.

On peut cependant imaginer des protections beaucoup plus sophistiquées, sans changer de clé, celle-ci étant par conception très polyvalente:

1) Protection par nombres aléatoires:
- le concepteur du logiciel développe et intègre dans son programme un algorithme de génération de nombres pseudo-aléatoires;
- au départ, le concepteur stocke en mémoire les deux premiers nombres générés par l'algorithme, soit $N(X)$ et $N(X+1)$;
- à chaque test de vérification de présence de la clé, $N(X)$ est lu et $N(X+1)$ est recalculé, puis comparé à $N(X+1)$ dans la clé;
- après chaque test, $N(X+1)$ et $N(X+2)$ remplacent $N(X)$ et $N(X+1)$ dans la clé.

Avec cet exemple d'application, le nombre testé n'a jamais la même valeur, ce qui rend la violation de la clé très difficile, du fait que la clé n'est jamais dans le même état après chaque vérification, et que, ainsi, les signaux transmis sont différents àchaque fois.

Un exemple plus simple du même type consisterait à: - stocker deux nombres dans la mémoire, par exemple 6 et 5, ayant entre eux une relation prédéterminée, par exemple une différence égale à 1 ;
- demander à l'ordinateur, par instructions ajoutées au logiciel à protéger, de vérifier que les deux nombres stockés dans la mémoire vérifient ladite relation prédéterminée, 6-5=1, pour s'assurer de la présence de la clé ;
- incrémenter ces deux nombres de 1, soit 7 et 6, et les stocker dans la mémoire à la place de 6 et 5. (Modulo un nombre correspondant à la capacité de la zone de mémoire)

Les deux nouveaux nombres vérifient eux aussi ladite relation et le prochain test sera positif. Là encore, le contenu de la mémoire change à chaque fois. Ce dernier exemple est trés simple, mais on pourrait choisir une relation et une loi de remplacement du contenu de la mémoire bien plus complexes.

2) Mise en mémoire d'une partie exécutable du logiciel à protéger: - le concepteur du logiciel mémorise quelques instructions d'exécution dans la clé ;
- lors de l'exécution, ces quelques instructions sont lues dans la clé; sans la clé, l'exécution n'est donc pas possible.

Par extension, l'invention est applicable à la location d'un logiciel ou d'un progiciel, par exemple de la façon suivante:
- le concepteur fournit à son client le logiciel et une clé selon l'invention ;
- la clé contient dans la mémoire la date du premier jour de location ;
- à chaque période de la location (semaine, mois, trimestre,...) est associé un mot de passe communiqué en début de période à l'utilisateur ;
- dans le logiciel, il existe un fichier dans lequel sont associés les mots de passe et les périodes correspondantes.

Les mots de passe ne sont communiqués qu'après acquittement du loyer. Pour éviter que les dates ne soient pas correctement saisies par l'utilisateur, la date n'est validée et mémorisée dans la clé que si elle est postérieure ou égale à la date précédemment mémorisée, et le nombre des exécutions autorisées pour une journée est limité si on prévoit un compteur dans la clé.

Il va de soi que de nombreuses améliorations peuvent être appliquées à la présente invention sans sortir du champ de protection tel que défini ci-dessus et dans les revendications. Ceci concerne par exemple le choix des composants électroniques ou logiques prévus entre la mémoire rémanente et les interfaces normalisées.

**Revendications**

1. Dispositif à mémoire de contrôle de l'utilisation d'un logiciel, du type clé (6, 10), comprenant un circuit électronique (13) connectable aux bornes de communication (11, 12, 17, 17') d'une interface normalisée prévue entre un ordinateur (1) et un de ses accessoires périphériques (2) et renvoyant des signaux de réponse à l'ordinateur lorsque celui-ci lui envoie des signaux d'interrogation, caractérisé en ce que ledit circuit comprend une mémoire rémanente (14, 14') reliée à ladite interface de façon à ce que ledit ordinateur (1), chargé dudit logiciel, puisse tantôt lire tantôt écrire des informations dans ladite mémoire (14, 14').

2. Dispositif selon la revendication 1 caractérisé en ce que ladite mémoire (14, 14') a une consommation d'énergie électrique suffisamment faible pour n'être alimentée en énergie que par ladite interface normalisée.

3. Dispositif selon la revendication 1 ou la revendication 2, caractérisé en ce que ladite mémoire (14, 14') est une mémoire morte programmable effaçable électriquement.

4. Dispositif selon la revendication 2 ou la revendication 3 caractérisé en ce que ladite interface est du type parallèle (17), ladite mémoire (14) comprenant une borne d'entrée de données (DI), une borne de sortie de données (DO), une borne de validation (CS), une borne d'horloge (CK) et une borne d'alimentation (Vcc), ladite borne de validation (CS) étant reliée par l'intermédiaire d'une porte ET (15) d'une part à la borne normalisée numéro 1 dite STROBE de ladite interface parallèle (17) et d'autre part à une des bornes normalisées dites de données de ladite interface parallèle (17), lesdites bornes d'entrée de données (DI), d'alimentation (Vcc) et d'horloge (CK) étant reliées à d'autres bornes normalisées dites de données de ladite interface parallèle (17), et ladite borne de sortie de données (DO) de ladite mémoire étant reliée par l'intermédiaire d'un moyen d'adaptation de signal (16) d'une part à une autre desdites bornes de données et/ou d'autre part à la borne normalisée numéro 10 dite ACKNOWLEDGE.

5. Dispositif selon la revendication 2 ou la revendication 3 caractérisé en ce que ladite interface (17') est du type série, ladite mémoire (14') comprenant une borne d'entrée de données (DI), une borne de sortie de données (DO), une borne de validation (CS), une borne d'horloge (CK) et une borne d'alimentation (Vcc), ladite borne de validation (CS) étant reliée par l'intermédiaire d'un premier tampon de protection (21) à la borne normalisée numéro 2 dite "TRANSMITTED DATA" de ladite interface (17'), ladite borne d'horloge (CK) étant reliée par l'intermédiaire d'un deuxième tampon de protection (22) à la borne normalisée numéro 20 dite "DATA TERMINAL READY" de ladite interface (17'), ladite borne d'entrée de données (DI) étant reliée par l'intermédiaire d'un troisième tampon de protection (23) à la borne normalisée numéro 4 dite "REQUEST TO SEND" de ladite interface, ladite borne de sortie de données (DO) étant reliée par l'intermédiaire d'un moyen d'adaptation de signal (16') à une borne de ladite interface (17') choisie dans le groupe constitué par les bornes normalisées numéros 6, 8 et 22 de ladite interface (17'), dites respectivement "DATA SET READY", "RECEIVED LINE SIGNAL DETECTOR" et "RING INDICATOR", et ladite borne d'alimentation (Vcc) étant reliée par l'intermédiaire d'un moyen d'accumulation régulée (24) et d'une porte OU (25) montés en série aux bornes normalisées numéros 4 et 20 de ladite interface de type série (17').

6. Dispositif selon la revendication 5 caractérisé en ce que ledit moyen d'accumulation régulée (24) comprend un condensateur et une diode dite Zener en parallèle.

7. Dispositif selon la revendication 5 ou la revendication 6, caractérisé en ce que lesdits deuxième (22) et troisième (23) tampons sont du type inversé, et comprennent, en série, une résistance et deux portes NON-ET depuis l'interface (17') vers ladite mémoire (14').

8. Procédé de contrôle de l'utilisation d'un logiciel par un ordinateur comprenant l'étape d'ajouter audit logiciel des instructions complémentaires subordonnant l'exploitation par l'ordinateur de tout ou partie dudit logiciel à la présence, à certaines des bornes périphériques dudit ordinateur d'un dispositif selon l'une des revendications revendication 1 à 7, caractérisé en ce que lesdites instructions complémentaires comprennent :
- la lecture d'informations contenues dans ladite mémoire,
- la vérification desdites informations par ledit ordinateur qui, en fonction des résultats de cette vérification, poursuit normalement ou non l'utilisation dudit logiciel, et
- l'écriture dans ladite mémoire d'autres informations remplaçant ou complétant les précédentes en vue d'une vérification ultérieure.

9. Procédé selon la revendication 8, caractérisé en ce que ladite vérification consiste à vérifier que lesdites informations sont bien reliées entre elles selon une relation prédéterminée inscrite dans ledit logiciel.

Fig. 1a

Fig. 1b

Fig. 2

Fig. 3

Fig. 4

Fig. 5a

Fig. 5b

Office européen
des brevets
RAPPORT DE RECHERCHE EUROPEENNE

Numero de la demande

EP 88 40 0173

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 183 608 (SCHLUMBERGER) <br> * Page 3, ligne 19 - page 4, ligne 6; page 5, lignes 3-8,31-34; page 7, ligne 22 - page 8, ligne 2; page 8, lignes 25-29; page 9, lignes 17-34; figures 1,2 * | 1,2 | G 06 F 1/00 |
| A | --- | 3,5,8,9 | |
| A | EP-A-0 084 441 (TABS LTD) <br> * Page 2, lignes 18-21; page 3, lignes 10-17; page 3, ligne 24 - page 4, ligne 12; page 4, lignes 19-25; figure 1 * <br> --- | 1,5,8,9 | |
| A | EP-A-0 135 422 (LEVEQUE) <br> * Page 2, ligne 30 - page 3, ligne 29; figure 1 * <br> --- | 1,3,5,8 ,9 | |
| A | US-A-4 562 306 (WAYNE et al.) <br> * Figures 1-4; colonne 2, lignes 39-53; colonne 8, lignes 25-31 * <br> --- | 1,2,4,8 ,9 | |
| A | FR-A-2 577 332 (LEVEQUE) <br> * Abrégé; revendications 1-3; figure 1 * <br> --- | 1,8,9 | DOMAINES TECHNIQUES RECHERCHES (Int. Cl.4) <br><br> G 06 F 1/00 |
| A | EP-A-0 165 789 (DUNHAM et al.) <br> * Abrégé * <br> ----- | 1,3 | |

Le présent rapport a été établi pour toutes les revendications

| Lieu de la recherche | Date d'achèvement de la recherche | Examinateur |
|---|---|---|
| LA HAYE | 24-06-1988 | MOENS R.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)